(19) Europäisches Patentamt
European Patent Office
Office européen des brevets

(11) **EP 4 653 907 A1**

(12) **EUROPEAN PATENT APPLICATION**

(43) Date of publication:
26.11.2025 Bulletin 2025/48

(21) Application number: 24214346.9

(22) Date of filing: 20.11.2024

(51) International Patent Classification (IPC):
*G01S 7/292* (2006.01)   *G01S 7/40* (2006.01)
*G01S 13/00* (2006.01)   *G01S 13/42* (2006.01)
*G01S 13/50* (2006.01)   *G01S 13/58* (2006.01)

(52) Cooperative Patent Classification (CPC):
G01S 13/42; G01S 7/2923; G01S 7/40;
G01S 13/003; G01S 13/50; G01S 13/588

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.05.2024 TW 113118858

(71) Applicant: Alpha Networks Inc.
300094 Hsinchu (TW)

(72) Inventors:
• SU, Hsuan-Jung
 300094 Hsinchu (TW)
• HOU, Chung-Yi
 300094 Hsinchu (TW)
• TSAY, Wen-Jiunn
 300094 Hsinchu (TW)
• YANG, Tzong-Shiann
 300094 Hsinchu (TW)

(74) Representative: Page White Farrer
Bedford House
21a John Street
London WC1N 2BF (GB)

(54) **METHOD OF ESTIMATING DIRECTION OF ARRIVAL (DOA) FOR RADAR SYSTEM**

(57) A method of estimating a direction of arrival (DoA) for a radar system (2) includes: for each time slot, one transmitting antenna (3) emitting a transmitted signal, one receiving antenna (4) receiving a reflected signal, a processing unit (5) obtaining an estimated distance based on a duration between signal emission and signal reception, and obtaining a relative speed based on the estimated distance and a prior estimated distanc; in response to performing the above steps at least twice, the processing unit (5) determining whether a stop condition is met; when the stop condition is met, the processing unit (5) setting the relative speed that was most recently obtained as an iterative relative speed and obtaining a compensation phase value based on the iterative relative speed; and the processing unit (5) obtaining the DoA based on the compensation phase value and a distance between two adjacent virtual antennas.

Figure 1

**Description**

The disclosure relates to a method of estimating direction of arrival (DoA) for a radar system, and more particularly to a method of estimating DoA for a radar system with relatively higher accuracy by reducing the effect of phase caused by movements of objects.

Radar detection technology is widely used to estimate, for an object in front of a radar system, the distance and angle of the object in relation to the radar system, and the speed of the object relative to the radar system. When the object moves, phase differences of signals received by receiving antennas of the radar system change, resulting in errors in the calculated angle. Therefore, reducing the errors in estimating the angle needs to be addressed.

Therefore, an object of the disclosure is to provide a method of estimating DoA for a radar system that can alleviate at least one of the drawbacks of the prior art.

According to an aspect of the disclosure, there is provided a method of estimating a direction of DoA for a radar system according to claim 1.

Other features and advantages of the disclosure will become apparent in the following detailed description of the embodiment(s) with reference to the accompanying drawings. It is noted that various features may not be drawn to scale.

Figure 1 is a flowchart illustrating an embodiment of a method of estimating DoA for a radar system according to the disclosure.

Figure 2 is a block diagram illustrating the radar system implementing the method of estimating DoA according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

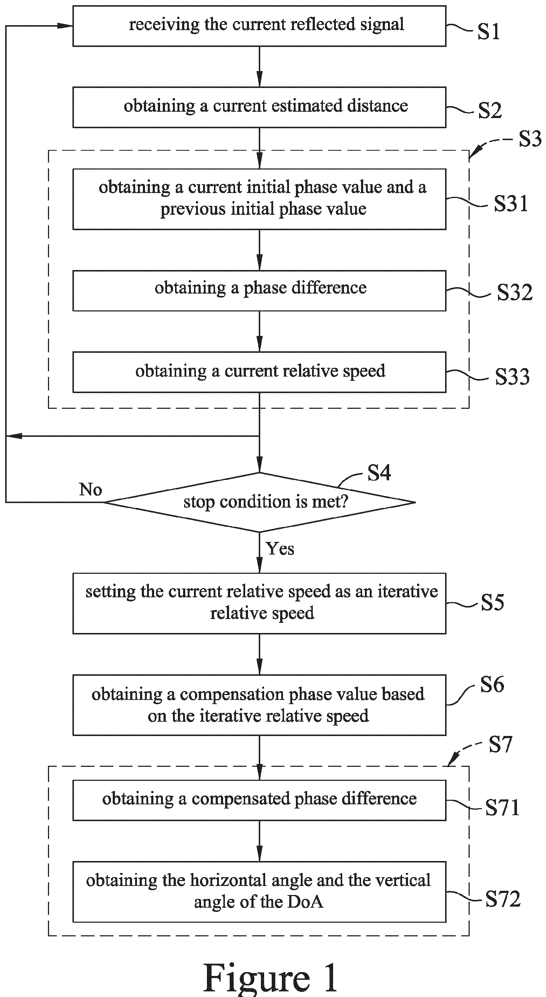

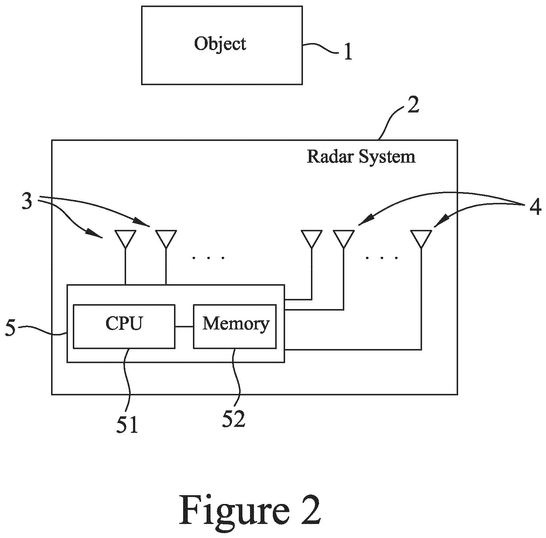

Referring to Figures 1 and 2, an embodiment of a method of estimating DoA for a radar system is implemented by a radar system 2. In this disclosure, the radar system 2 is, but not limited to, a time-division multiplexing multi-input multi-output (TDM MIMO) radar system for detecting an object 1 in its vicinity. The radar system 2 includes a processing device 5, a number M of transmitting antennas 3 and a number K of receiving antennas 4. For example, the number M of transmitting antennas 3 and the number K of receiving antennas 4 form an array of virtual antennas arranged in an M×K matrix configuration. In this embodiment, the number M and the number K are both greater than 2; for example, the number M is equal to four, and the number K is equal to nine. The virtual antennas are constructed using signal processing techniques, such that the signals received by the receiving antennas 4 are processed and reconstructed as if they were received by the virtual antennas. In the following, the virtual antenna receiving a signal means that, while the signal is actually received by a physical antenna, it is simulated as being received by the virtual antenna.

The processing device 5 includes a central processing unit (CPU) 51 and a memory 52 electrically connected to the CPU 51. Examples of the CPU 51 includes, for example but not limited to, a single-core processor, a multi-core processor, a dual-core mobile processor, a microprocessor, a microcontroller, a digital signal processor (DSP), a field-programmable gate array (FPGA), an application-specific integrated circuit (ASIC), a radio frequency integrated circuit (RFIC), and the like. The memory 52 may be random access memory (RAM), read-only memory (ROM), programmable ROM (PROM), firmware, and/or flash memory, etc., that store instructions. When the CPU 51 executes these instructions stored in the memory 52, the CPU 51 performs steps S2 to S7 of the following procedure.

Before getting into the details of the method of estimating DoA for a radar system, operations of the transmitting antennas 3 are described first. During each time slot, one of the transmitting antennas 3 emits a transmitted signal which is to be reflected by the object 1 to form a reflected signal. Specifically, during a current time slot, one of the transmitting antennas 3 emits a current transmitted signal which is to be reflected by the object 1 to form a current reflected signal; similarly, during a previous time slot immediately before the current time slot, one of the transmitting antennas 3 emitted a previous transmitted signal which was reflected by the object 1 to form a previous reflected signal. It should be noted that the following steps of the method is performed with respect to the current time slot, and should be implemented with respect to each of the virtual antennas.

In step S1, the current reflected signal is received by the virtual antenna at a current time of reception ($T_b$). It is noted that, for the previous time slot, the previous reflected signal was received by the virtual antenna at a previous time of reception ($T_a$).

In step S2, the CPU 51 obtains a current estimated distance based on a duration between a current emitting time point at which the current transmitted signal was emitted and the current time of reception ($T_b$) at which the current reflected signal was received by the virtual antenna.

Specifically, the CPU 51 calculates the current estimated distance using the following formula:

$$d = \frac{c\tau}{2} \qquad (1)$$

where d is the current estimated distance, c is the speed of light, and $\tau$ is the duration between the current emitting time point and the current time of reception *(Tb)*.

In step S3, the CPU 51 obtains an estimated current relative speed based on the current estimated distance and a previous estimated distance which was obtained for the previous time slot. It is noted that, when the previous reflected signal was received by the virtual antenna at the previous time of reception ($T_a$), the CPU 51 calculated the previous estimated distance then using the formula (1) where d is the previous estimated distance and $\tau$ is a duration between a previous emitting time point at which the previous transmitted signal was emitted and the previous time of reception ($T_a$).

Specifically, step S3 includes the following sub-steps S31 to S33. In sub-step S31, the CPU 51 obtains a current initial phase value based on the current estimated distance and a wavelength of the current reflected signal, and obtains a previous initial phase value based on the previous estimated distance and a wavelength of the previous reflected signal. The current initial phase value and the previous initial phase value are calculated based on the following formula:

$$\phi = \frac{4\pi d}{\lambda}, \ \lambda = \frac{f}{c} \qquad (2)$$

where $\phi$ is the current/previous initial phase value, d is the current/previous estimated distance, and $f$ is a frequency of the current/previous reflected signal.

In sub-step S32, the CPU 51 obtains a phase difference based on the current initial phase value and the previous initial phase value using the following formula

$$\Delta\phi = \phi_b - \phi_a \qquad (3)$$

where $\phi_b$ is the current initial phase value, and $\phi_a$ is the previous initial phase value.

In sub-step S33, the CPU 51 obtains the current relative speed based on the phase difference and the duration between the current emitting time point and the current time of reception ($T_b$). Specifically, sub-step S33 includes calculating the current relative speed using the following formula:

$$v = \frac{\lambda\Delta\phi}{2\pi T_c} \qquad (4)$$

where $\lambda$ is the wavelength of the current reflected signal, $\Delta\phi$ is the phase difference, and $T_c = T_b - T_a$.

The above steps (S1-S3) are repeated over time. When two or more relative speeds respectively estimated for two or more successive time slots are obtained (i.e., the CPU 51 has obtained the current relative speed based on the current estimated distance the previous estimated distance, and a previous relative speed based on the previous estimated distance and a further previous estimated distance), then the CPU 51 determines whether a stop condition is met (step S4).

When it is determined that the stop condition is met, the procedure proceeds to step S5, where the CPU 51 sets the current relative speed as an iterative relative speed ($v'$). When it is determined that the stop condition is not met, the procedure returns to step S1. In the present embodiment, the stop condition is that the difference between the current relative speed and the previous relative speed is less than a threshold, i.e., the estimated relative speed is approaching stabilization. In other embodiments, the stop condition is that the number of repetitions of the above steps (S1-S3) reaches a predetermined number, e.g., 20. In practice, regardless of what the stop condition is, steps S1 to S3 are executed in succession and repeated at least two times.

In step S6, the CPU 51 obtains a compensation phase value based on the iterative relative speed. Specifically, step S6 includes calculating the compensation phase value using the following formula:

$$\phi_d = \frac{2\pi v' T_c}{\lambda} \qquad (5)$$

where $\phi_d$ is the compensation phase value.

In step S7, the CPU 51 obtains the DoA (including a horizontal angle and a vertical angle) based on the compensation phase value and a distance between adjacent two of the virtual antennas. Step S7 includes the following sub-steps S71 and S72.

In sub-step S71, the CPU 51 obtains a compensated phase difference based on the compensation phase value and an initial phase value set (including an initial horizontal phase value and an initial vertical phase value). Specifically, the CPU 51 calculates a compensated horizontal phase difference $\Delta\phi_h$ and a compensated vertical phase difference $\Delta\phi_v$, which cooperatively serve as the compensated phase difference, using the following formulas:

$$\Delta\phi_h = \Delta\phi_{h0} - \phi_d \qquad (6)$$

$$\Delta\phi_v = \Delta\phi_{v0} - \phi_d \qquad (7)$$

where $\Delta\phi_{h0}$ is an initial horizontal phase difference that is the phase difference between the reflected signal received by one of the virtual antennas and the reflected signal received by a horizontally adjacent one of the virtual antennas at the moment the signal arrives, $\Delta\phi_{v0}$ is an initial vertical phase difference between the reflected signal received by one of the virtual antennas and the reflected signal received by a vertically adjacent one of the virtual antennas at the moment the signal arrives, and $\phi_d$ is the compensation phase value.

In sub-step S72, the CPU 51 obtains the horizontal angle and the vertical angle of the DoA based on the compensated phase difference, using the following formulas:

$$\theta_h = sin^{-1}\left(\frac{\lambda\Delta\phi_h}{2\pi l}\right) \qquad (8)$$

$$\theta_v = sin^{-1}\left(\frac{\lambda\Delta\phi_v}{2\pi l}\right) \qquad (9)$$

where $\theta_h$ is the horizontal angle, $\theta_v$ is the vertical angle, and $l$ is the distance between adjacent two of the virtual antennas.

In summary, since the movement of the detected object 1 affects the estimation of the phase difference of reflected signals received by the virtual antenna, the present disclosure calculates the relative speed of the object 1 in an iterative manner until it becomes stable, and compensates for the horizontal phase difference and the vertical phase difference of the reflected signals using that relative speed, and eliminates the speed interference by using the compensated horizontal phase difference and the compensated vertical phase difference. Since the phase difference is compensated for, the phase value of the entire virtual antenna matrix is fairly unaffected by velocity, so a more accurate angle can be calculated.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

**Claims**

1. A method of estimating a direction of arrival, DoA, for a radar system (2), the radar system (2) being used for detecting an object (1) and including a processing unit (5), a number M of transmitting antennas (3) and a number K of receiving antennas (4) forming an array of virtual antennas arranged in an M×K matrix configuration, the method being **characterized by** the following steps of:

   for each time slot,

      one of the transmitting antennas (3) emitting a transmitted signal which is to be reflected by the object (1) to form a reflected signal, the reflected signal being received at a current time of reception,
      the processing unit (5) obtaining an estimated distance based on a duration between a time point at which the transmitted signal was emitted and a time of reception at which the reflected signal was received, and
      the processing unit (5) obtaining a relative speed based on the estimated distance and another estimated distance which was obtained for an immediately prior time slot;

   in response to performing the above steps at least twice, the processing unit (5) determining whether a stop condition is met;
   in response to determining that the stop condition is met, the processing unit (5) setting the relative speed that was most recently obtained as an iterative relative speed;
   the processing unit (5) obtaining a compensation phase value based on the iterative relative speed; and
   the processing unit (5) obtaining the DoA based on the compensation phase value and a distance between adjacent two of the virtual antennas.

2. The method as claimed in claim 1, wherein the step of obtaining the estimated distance includes calculating the estimated distance using

$$d = \frac{c\tau}{2} \, ,$$

   where d is the estimated distance, c is speed of light, and $\tau$ is the duration.

3. The method as claimed in claim 1 or 2, wherein for a current time slot, one of the transmitting antennas (3) emits a current transmitted signal which is to be reflected by the object to form a current reflected signal; for a previous time slot immediately before the current time slot, one of the transmitting antennas (3) emitted a previous transmitted signal which was reflected by the object (1) to form a previous reflected signal; and

wherein for the current time slot, the step of obtaining the relative speed includes:

obtaining a current initial phase value based on the estimated distance obtained for the current time slot and a wavelength of the current reflected signal, and obtaining a previous initial phase value based on the estimated distance obtained for the previous time slot and a wavelength of the previous reflected signal;

obtaining a phase difference based on the current initial phase value and the previous initial phase value; and

obtaining the relative speed based on the phase difference and the duration.

4. The method as claimed in claim 3, wherein obtaining the current initial phase value and the previous initial phase value is to calculate each of the current initial phase value and the previous initial phase value based on

$$\phi = \frac{4\pi d}{\lambda} \ ,$$

$$d = \frac{c\tau}{2} \ , \lambda = \frac{f}{c}$$

where , $\phi$ represents the current initial phase value or the previous initial phase value, $c$ is speed of light, $\tau$ is the duration, and d represents the estimated distance obtained for the current time slot and $f$ represents a frequency of the current reflected signal when the current initial phase value is being calculated, and d represents the estimated distance obtained for the previous time slot and $f$ represents a frequency of the previous reflected signal when the previous initial phase value is being calculated.

5. The method as claimed in claim 3 or 4, wherein the step of obtaining the phase difference includes calculating the phase difference using

$$\Delta\phi = \phi_b - \phi_a \ ,$$

where $\phi_b$ is the current initial phase value and $\phi_a$ is the previous initial phase value.

6. The method as claimed in any one of claims 3 to 5, wherein, for the current time slot, the step of obtaining the relative speed includes calculating the relative speed using

$$v = \frac{\lambda\Delta\phi}{2\pi T_c} \ ,$$

where $\lambda$ is the wavelength of the current reflected signal, $\Delta\phi$ is the phase difference, $T_c = T_b - T_a$, $T_b$ is a current time of reception at which the receiving antenna received the current reflected signal, and $T_a$ is a previous time of reception at which the receiving antenna received the previous reflected signal.

7. The method as claimed in any one of claims 1 to 6, wherein for a current time slot, one of the transmitting antennas (3) emits a current transmitted signal which is to be reflected by the object (1) to form a current reflected signal; for a previous time slot immediately before the current time slot, one of the transmitting antennas (3) emitted a previous transmitted signal which was reflected by the object (1) to form a previous reflected signal; and

wherein the step of obtaining the compensation phase value includes calculating the compensation phase value using

$$\phi_d = \frac{2\pi v' T_c}{\lambda}$$

, where $\phi_d$ is the compensation phase value, $v'$ is the iterative relative speed, $T_c = T_b - T_a$, $T_b$ is a current time of reception at which the current reflected signal is received, $T_a$ is a previous time of reception at which the previous reflected signal was received, and $\lambda$ is the wavelength of the current reflected signal.

8. The method as claimed in any one of claims 1 to 7, wherein the step of obtaining the DoA includes substeps of:

obtaining a compensated phase difference based on the compensation phase value and an initial phase value set, and
obtaining the DoA based on the compensated phase difference.

9. The method as claimed in claim 8, wherein the substep of obtaining the compensated phase difference includes calculating a compensated horizontal phase difference $\Delta\phi_h$ and a compensated vertical phase difference $\Delta\phi_v$ using following formulas:

$$\Delta\phi_h = \Delta\phi_{h0} - \phi_d,$$

$$\Delta\phi_v = \Delta\phi_{v0} - \phi_d,$$

where $\Delta\phi_{h0}$ is an initial horizontal phase difference that is the phase difference between the reflected signal simulated to be received by one of the virtual antennas and the reflected signal simulated to be received by a horizontally adjacent one of the virtual antennas at the moment the reflected signal arrives, $\Delta\phi_{v0}$ is an initial vertical phase difference between the reflected signal simulated to be received by one of the virtual antennas and the reflected signal simulated to be received by a vertically adjacent one of the virtual antennas at the moment the reflected signal arrives, $\phi_d$ is the compensation phase value; and

wherein the compensated horizontal phase difference and the compensated vertical phase difference cooperatively serve as the compensated phase difference.

10. The method as claimed in claim 9, wherein the sub-step of obtaining the DoA based on the compensated phase difference includes calculating a horizontal angle and a vertical angle using following formulas:

$$\theta_h = sin^{-1}\left(\frac{\lambda\Delta\phi_h}{2\pi l}\right),$$

$$\theta_v = sin^{-1}\left(\frac{\lambda\Delta\phi_v}{2\pi l}\right),$$

where $\theta_h$ is the horizontal angle, $\theta_v$ is the vertical angle, $l$ is the distance between adjacent two of the virtual antennas; and

wherein the horizontal angle and the vertical angle serve as the DoA.

11. A processing unit (5) for a radar system (2), the radar system (2) being used for detecting an object (1) and including a number M of transmitting antennas (3) and a number K of receiving antennas (4) forming an array of virtual antennas arranged in an M×K matrix configuration to, for each time slot, emit by one of the transmitting antennas (3) a transmitted signal which is to be reflected by the object (1) to form a reflected signal, the reflected signal being received at a current time of reception, wherein the a processing unit (5) is for estimating a direction of arrival, DoA, and **characterized in that** the processing unit (5) is configured to:

obtain an estimated distance based on a duration between a time point at which the transmitted signal was emitted by one of the transmitting antennas (3) and a time of reception at which the reflected signal was received, and obtain a relative speed based on the estimated distance and another estimated distance which was obtained for an immediately prior time slot; in response to performing the above steps at least twice, determine whether a stop condition is met;

in response to determining that the stop condition is met, set the relative speed that was most recently obtained as an iterative relative speed;

obtain a compensation phase value based on the iterative relative speed; and obtain the DoA based on the compensation phase value and a distance between adjacent two of the virtual antennas.

12. The processing unit as claimed in claim 11, configured to perform the steps of any of claims 2 to 10.

13. A radar system (2) for detecting an object (1), the radar system including

a number M of transmitting antennas (3) and a number K of receiving antennas (4) forming an array of virtual antennas arranged in an M×K matrix configuration to, for each time slot, emit by one of the transmitting antennas (3) the transmitted signal which is to be reflected by the object (1) to form the reflected signal, the reflected signal being received at the current time of reception, and the processing unit according to claim 10 or 11.

```
┌─────────────────────────────────────┐
│   receiving the current reflected signal   │──── S1
└─────────────────────────────────────┘
                    │
                    ▼
┌─────────────────────────────────────┐
│    obtaining a current estimated distance    │──── S2
└─────────────────────────────────────┘

┌╌╌╌╌╌╌╌╌╌╌╌╌╌╌╌╌╌╌╌╌╌╌╌╌╌╌╌╌╌┐  ╌╌ S3
╎  ┌───────────────────────────────┐  ╎
╎  │  obtaining a current initial phase value and a  │──── S31
╎  │       previous initial phase value       │  ╎
╎  └───────────────────────────────┘  ╎
╎                  │                  ╎
╎                  ▼                  ╎
╎  ┌───────────────────────────────┐  ╎
╎  │     obtaining a phase difference      │──── S32
╎  └───────────────────────────────┘  ╎
╎                  │                  ╎
╎                  ▼                  ╎
╎  ┌───────────────────────────────┐  ╎
╎  │    obtaining a current relative speed     │──── S33
╎  └───────────────────────────────┘  ╎
└╌╌╌╌╌╌╌╌╌╌╌╌╌╌╌╌╌╌╌╌╌╌╌╌╌╌╌╌╌┘
                    │
                    ▼
          ◇─────────────────◇   S4
    No   ◇  stop condition is met?  ◇
◄────────◇─────────────────◇
                    │ Yes
                    ▼
┌─────────────────────────────────────┐
│ setting the current relative speed as an iterative │──── S5
│              relative speed               │
└─────────────────────────────────────┘
                    │
                    ▼
┌─────────────────────────────────────┐
│  obtaining a compensation phase value based  │──── S6
│         on the iterative relative speed        │
└─────────────────────────────────────┘

┌╌╌╌╌╌╌╌╌╌╌╌╌╌╌╌╌╌╌╌╌╌╌╌╌╌╌╌╌╌┐  ╌╌ S7
╎  ┌───────────────────────────────┐  ╎
╎  │   obtaining a compensated phase difference   │──── S71
╎  └───────────────────────────────┘  ╎
╎                  │                  ╎
╎                  ▼                  ╎
╎  ┌───────────────────────────────┐  ╎
╎  │  obtaining the horizontal angle and the vertical  │──── S72
╎  │            angle of the DoA             │  ╎
╎  └───────────────────────────────┘  ╎
└╌╌╌╌╌╌╌╌╌╌╌╌╌╌╌╌╌╌╌╌╌╌╌╌╌╌╌╌╌┘
```

# Figure 1

Figure 2

**EP 4 653 907 A1**

Europäisches Patentamt
European Patent Office
Office européen des brevets

# EUROPEAN SEARCH REPORT

**Application Number**

**EP 24 21 4346**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 865 905 A1 (SAMSUNG ELECTRONICS CO LTD [KR]) 18 August 2021 (2021-08-18) * paragraphs [0005] - [0032] * * paragraphs [0045] - [0108] * ----- | 1-13 | INV. G01S7/292 G01S7/40 G01S13/00 G01S13/42 |
| Y | DE 10 2017 128508 A1 (GM GLOBAL TECH OPERATIONS LLC [US]) 7 June 2018 (2018-06-07) * paragraphs [0011], [0012] * ----- | 1-13 | G01S13/50 G01S13/58 |
| A | TAKEMOTO RIKU ET AL: "Low-Computation DOA Estimation using Virtual Antenna in 2D MIMO Systems", 2023 INTERNATIONAL CONFERENCE ON ADVANCED TECHNOLOGIES FOR COMMUNICATIONS (ATC), IEEE, 19 October 2023 (2023-10-19), pages 196-201, XP034473566, DOI: 10.1109/ATC58710.2023.10318516 [retrieved on 2023-11-20] * the whole document * ----- | 1-13 | |

**TECHNICAL FIELDS SEARCHED (IPC)**

G01S

The present search report has been drawn up for all claims

| Place of search | Date of completion of the search | Examiner |
|---|---|---|
| Munich | 2 May 2025 | Hirsch, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

## ANNEX TO THE EUROPEAN SEARCH REPORT
## ON EUROPEAN PATENT APPLICATION NO.

EP 24 21 4346

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| EP  3865905       A1 | 18-08-2021 | CN    113253252 A<br>EP      3865905 A1<br>KR  20210101957 A<br>US    2021247508 A1 | 13-08-2021<br>18-08-2021<br>19-08-2021<br>12-08-2021 |
| DE 102017128508 A1 | 07-06-2018 | CN      108152809 A<br>DE 102017128508 A1<br>US    2018156911 A1 | 12-06-2018<br>07-06-2018<br>07-06-2018 |

EPO FORM P0459

For more details about this annex : see Official Journal of the European Patent Office, No. 12/82